# EUROPÄISCHE PATENTSCHRIFT

(11) **EP 1 135 955 B1**
(45) Veröffentlichungstag und Bekanntmachung des Hinweises auf die Patenterteilung: **22.09.2004**
(21) Anmeldenummer: 99966808.0
(22) Anmeldetag: 01.12.1999
(51) Int. Cl.: H04Q 7/38, H04B 7/26, H04J 11/00, H04J 13/04

(54) **VERFAHREN ZUR DATENÜBERTRAGUNG IN EINEM FUNK-KOMMUNIKATIONSSYSTEM**
METHOD FOR DATA TRANSMISSION IN A RADIO COMMUNICATIONS SYSTEM
PROCEDE DE TRANSMISSION DE DONNEES DANS UN SYSTEME DE RADIOCOMMUNICATION

(30) Priorität: 09.12.1998 DE 19856834
(43) Veröffentlichungstag der Anmeldung: 26.09.2001
(73) Patentinhaber: SIEMENS AKTIENGESELLSCHAFT, 80333 München (DE)
(72) Erfinder: SOMMER, Volker, D-13503 Berlin (DE); KÖHN, Reinhard, D-14197 Berlin (DE); BENZ, Michael, D-13629 Berlin (DE); KLEIN, Anja, D-10709 Berlin (DE)
(86) Internationale Anmeldenummer: PCT/DE1999/003815
(87) Internationale Veröffentlichungsnummer: WO 2000/035225

(56) Entgegenhaltungen:
- EP-A- 0 854 596
- EP-A- 1 006 692
- WO-A-97/46044
- WU G ET AL: "AN INTEGRATED TRANSMISSION PROTOCOL FOR BROADBAND MOBILE MULTIMEDIACOMMUNICATION SYSTEMS" IEEE VEHICULAR TECHNOLOGY CONFERENCE,US,NEW YORK, IEEE, Bd. CONF. 47, 1997, Seiten 1346-1350, XP000738581 ISBN: 0-7803-3660-7

## Beschreibung

Die Erfindung betrifft ein Verfahren zur Datenübertragung in einem Funk-Kommunikationssystem, insbesondere in als UMTS (universal mobile telecommunication system) bezeichneten Mobilfunksystemen mit breitbandiger Funkschnittstelle.

In Funk-Kommunikationssystemen werden Daten mit Hilfe von elektromagnetischen Wellen über eine Funkschnittstelle übertragen. Die Funkschnittstelle bezieht sich auf eine Verbindung zwischen einer Basisstation und Teilnehmerstationen, wobei die Teilnehmerstationen Mobilstationen oder ortsfeste Funkstationen sein können. Das Abstrahlen der elektromagnetischen Wellen erfolgt dabei mit Trägerfrequenzen, die in dem für das jeweilige System vorgesehenen Frequenzband liegen. Für zukünftige Funk-Kommunikationssysteme, beispielsweise das UMTS-Mobilfunksystem oder andere Systeme der 3. Generation sind Frequenzen im Frequenzband von ca. 2000 MHz vorgesehen, wobei die Bandbreite eines Kanals 5 MHz beträgt.

Für das UMTS-Mobilfunksystem ist im Gegensatz zu Systemen wie GSM (global system for mobile communications) eine Mehrzahl von auch parallel zu übertragenden Diensten vorgesehen. In den Offenlegungsschriften EP-A-1006692 und DE 198 55 194 sind Möglichkeiten beschrieben, die Transportformate der Kombination von Daten mehrerer Dienste zu signalisieren. Die Daten mehrerer Dienste einer Verbindung werden dabei über einen gemeinsam genutzten physikalischen Kanal übertragen.

Die Nutzung von gemeinsam genutzten physikalischen Kanälen für die Übertragung von Daten mehrerer Dienste einer Verbindung zu einer Teilnehmerstation setzt voraus, daß eine eindeutige Abbildungsvorschrift die Zuordnung der Dienste zu unterschiedlichen Segmenten des physikalischen Kanals angibt.

Ein physikalischer Kanal wird beispielsweise durch ein Frequenzband und einen Spreizkode (CDMA code division multiple access) innerhalb eines Rahmens definiert.

Zur Beschreibung der Abbildungsvorschrift sind folgende Begriffe üblich:

### Transport Format (TF):

Ein Transportformat definiert eine Datenrate, eine Kodierung, eine Verwürfelung (Interleaving), eine Datenratenanpassung durch Punktierung und eine Fehlerschutzvorschrift eines Transportkanals für einen Dienst.

### Transport Format Set (TFS):

Hiermit wird ein Satz möglicher Transportformate bezeichnet, die für einen speziellen Dienst erlaubt sind.

### Transport Format Combination (TFC):

Dieser Begriff gibt eine mögliche Kombination von Transportformaten der verschiedenen Dienste an, die auf einen gemeinsamen physikalischen Kanal abgebildet werden.

### Transport Format Combination Set (TFCS):

Hiermit wird ein Satz möglicher TFC als Teilmenge aller TFC bezeichnet, die für eine spezielle Verbindung erlaubt sind.

### Transport Format Combination Identifier (TFCI):

Diese Information gibt die aktuell verwendete Kombination von Transportformaten innerhalb des TFCS an.

Für eine bedarfsgerechte Wahl der aktuell verwendeten Kombination von Transportformaten der verschiedenen Dienste ist eine Änderbarkeit des TFC und damit eine regelmäßig Signalisierung des TFCI notwendig. Diese Signalisierung bindet jedoch Übertragungskapazität. Je größer die Anzahl möglicher Kombinationsmöglichkeiten (TFCS), umso mehr Kapazität wird zur Signalisierung benötigt.

Bei dem für den FDD-Modus (FDD frequency division duplex) für das UMTS-Mobilfunksystem gewählten Breitband-CDMA System tritt beim Senden von der Basisstation zur Teilnehmerstation in Abwärtsrichtung (Downlink) das Problem auf, daß die Anzahl der gleichzeitig zu nutzbaren orthogonalen Spreizcodes limitiert und hierdurch die Unterstützung variabler Datenraten erschwert ist. So ist es bei höheren Vekehrsdichten im System nicht möglich, allen Teilnehmerstationen soviele dedizierte, d.h. ausschließlich von der Teilnehmerstation genutzte, Kanäle (DCH) zuzuordnen, wie diese bei Übertragung mit ihrer jeweils höchsten Datenrate benötigten.

Deshalb werden in Abwärtsrichtung gemeinsame Kanäle, sogenannte "Shared Channel" (DSCH downlink shared channel) definiert, siehe dazu ETSI SMG2 UMTS-L1, Tdoc SMG2 UMTS-L1 559/98, vom 9. November 1998. Die gemeinsamen Kanäle werden innerhalb des breitbandigen Frequenzbandes durch Spreizcodes gebildet, die temporär verschiedenen Verbindungen bzw. Teilnehmerstationen für jeweils die Dauer eines oder mehrerer Rahmen zugeordnet werden. Hierbei entsteht jedoch das Problem, wie einer Teilnehmerstation mit minimalem Aufwand signalisiert werden kann, ob und wenn ja, in welchen dieser gemeinsamen Kanäle Informationen für die Teilnehmerstation übertragen werden.

Aus ETSI SMG2 UMTS-L1, Tdoc SMG2 UMTS-L1 559/98, vom 9. November 1998, ist dazu bekannt, daß die Signalisierung der Datenraten für die im Zeitmultiplex übertragenen Dienste mittels des TFCI-Parameters geschieht, der während jedes Rahmens als Teil der Kontrollinformation, d.h. In-Band übermittelt wird. Um die schnelle Allokierung von gemeinsamen Kanälen zu gewährleisten, wird eine explizite Signalisierung vorgeschlagen, die eine bestimmte Anzahl dieser TFCI-Bits ausschließlich dafür verwendet, einen bestimmten Spreizcode anzuzeigen (siehe vorletzte Seite).

Diese Lösung hat den Nachteil, daß hierdurch bei gegebener Anzahl von TFCI-Bits die Anzahl der Kombinationensmöglichkeiten der Transportformate der Dienste deutlich eingeschränkt wird, was die Flexibilität bei der Übertragung variabler Datenraten erheblich beeinflußt.

Der Erfindung liegt die Aufgabe zugrunde, ein Verfahren und ein Funk-Kommunikationssystem anzugeben, die bei der Nutzung von gemeinsamen Kanälen für mehrere Verbindungen die Flexibilität der Ressourcenzuweisung bei der Übertragung variabler Datenraten erhöhen. Diese Aufgabe wird durch das Verfahren nach den Merkmalen des Anspruchs 1 und das Kommunikationssystem mit den Merkmalen des Anspruch 10 gelöst. Vorteilhafte Weiterbildungen sind den Unteransprüchen zu entnehmen.

Der Erfindung liegt die Idee zugrunde, die Signalisierung der verwendeten gemeinsamen Kanäle implizit über die Datenrate durchzuführen und nur bei bestimmten Datenraten der einzelnen Dienste mehrere Kombinationen von Kanälen (Spreizcodes) alternativ zuzulassen. Damit wird Übertragungskapazität eingespart, denn es müssen keine einzelnen Bits innerhalb des TFCI-Parameters nur für die Zuteilung der gemeinsamen Kanäle zu unterschiedlichen Verbindungen reserviert werden. Die Datenrate wird In-Band signalisiert, wobei diese Information über die Datenrate nicht in jedem Rahmen vollständig enthalten sein muß. Informationen aus dem Verbindungskontext bzw. aus vorangegangenen Rahmen können ebenso zur Bestimmung der Datenrate herangezogen werden.

Nach einer vorteilhaften Weiterbildung der Erfindung kann durch Abbildung derselben Kombination von Transportformaten der Dienste mittels des TFCI auf verschiedene Kanäle ein Höchstmaß an Flexibilität bei minimalem Signalisierungsaufwand erreicht werden kann.

Die Beziehung zwischen zugewiesener Datenrate und zu benutzenden gemeinsamen Kanälen wird in einem getrennten Signalisierungskanal vereinbart, so daß vom jeweiligen Wert des TFCI-Parameters die gewählte Kombination an Kanälen einschließlich eines oder mehrerer gemeinsamer Kanäle für den Empfänger ableitbar ist. Diese Signalisierung der Beziehung (Abbildungsvorschrift der TFCI-Werte auf festgelegte Kombinationen der Transportformate) erfolgt vorteilhafterweise beim Verbindungsaufbau zwischen Basisstation und Teilnehmerstation. Die Datenrate der TFCI-In-Band-Signalisierung ist hoch und belegt erhebliche Übertragungsressourcen. Können hierbei Einsparungen durch allgemeingültige Vereinbarungen zu Verbindungsbeginn erreicht werden, so kann die Anzahl benötigter TFCI-Bits verringert oder die Anzahl der Kombinationsmöglichkeiten erhöht werden.

Durch das erfindungsgemäße Verfahren und deren vorteilhafte Weiterbildungen ergeben sich folgende Vorteile:
- Bei rein impliziter Signalisierung entsteht kein zusätzlicher Signalisierungsaufwand, wodurch die zur Verfügung stehenden TFCI-Bits ausschließlich zur Signalisierung der Kombination der Datenraten der einzelnen Dienste mit sehr feiner Granularität genutzt werden können.
- Durch die implizite Signalisierung kann für jede Verbindung eine hohe maximale Übertragungskapazität allokiert werden. Die hierbei auftretenden Abhängigkeiten der möglichen Datenraten zwischen den Verbindungen fallen um so weniger ins Gewicht, je mehr Verbindungen beteiligt sind und gemeinsame Kanäle zur Verfügung stehen.
- Durch die zusätzlich mögliche Zuordnung gleicher Dienstkombinationen auf verschiedene gemeinsame Kanäle mit jeweils eindeutigem TFCI-Wert kann eine sehr hohe Flexibilität erreicht werden.
- Der Aufwand zur Signalisierung von gemeinsamen Kanälen kann sehr genau an die Anforderungen der Verbindung angepaßt werden und muß nicht in ganzen Bits erfolgen.
- Die Verwendung von gemeinsamen Kanälen kann auf bestimmte, höherratige Dienstkombinationen bzw. solche mit hoher Datenratendynamik beschränkt werden, während niedrigratige Dienstkombinationen ausschließlich mittels dedizierter Kanäle übertragen werden.
- Es ist möglich, gemeinsame Kanäle verbindungsorientiert und dynamisch zuzuordnen, abhängig von der aktuellen Anzahl belegter Kanäle.

Ausführungsbeispiele der Erfindung werden anhand der beiliegenden Zeichnungen näher erläutert.

Dabei zeigen
- Fig 1: eine schematische Darstellung eines Funk-Kommunikationssystems,
- Fig 2: ein Schichtenmodell der Übertragungsprotokolle,
- Fig 3, 4: Abbildungen von Daten verschiedener Dienste auf gemeinsam genutzte physikalische Kanäle,
- Fig 5, 6: Tabellen mit Zuteilungsmöglichkeiten von gemeinsamen Kanälen für mehrere Verbindungen,
- Fig 7, 8: mehrdeutige Zuteilungen und damit Verringerung der Wahrscheinlichkeit von Blockierungen, und
- Fig 9: eine rahmenweise Datenübertragung mit In-Band-Signalisierung.

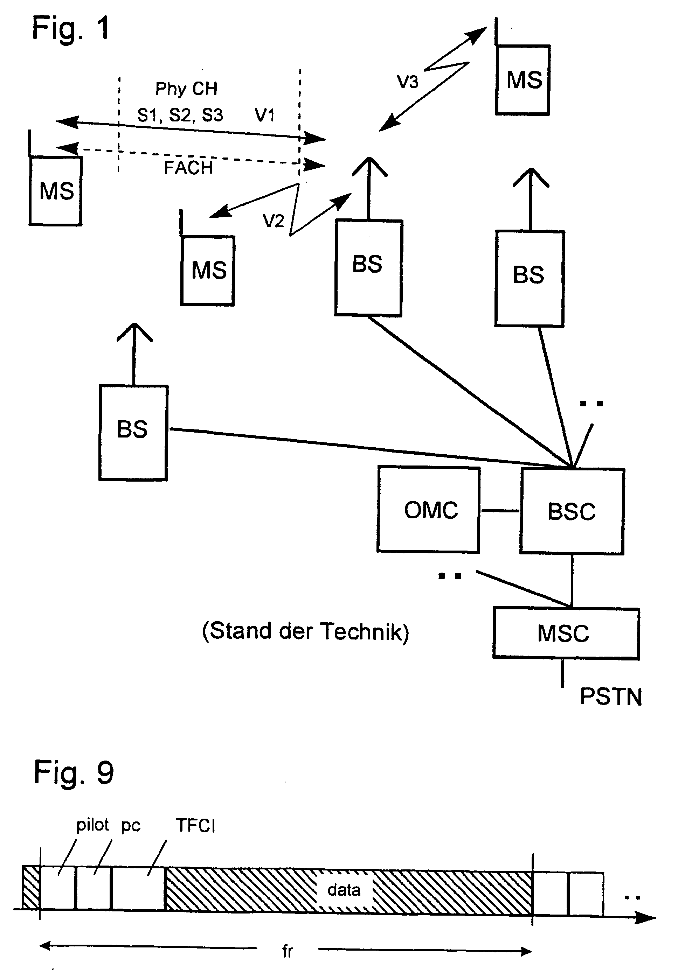

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zur Steuerung der Übertragungsressourcen verbunden. Jede dieser Einrichtungen RNM ermöglicht wiederum eine Verbindung zu zumindest einer Basisstation BS.

Eine Basisstation BS kann über eine Funkschnittstelle eine Verbindung zu Teilnehmerstationen, z.B. Mobilstationen MS oder anderweitigen mobilen und stationären Endgeräten aufbauen. Durch jede Basisstation BS wird zumindest eine Funkzelle gebildet. In Fig 1 sind Verbindungen zur Übertragung von Nutzinformationen zwischen einer Basisstation BS und Mobilstationen MS dargestellt. Innerhalb von einer Verbindung V1 werden Daten von beispielsweise drei Diensten S (S1, S2, S3) innerhalb eines oder mehrerer physikalischer Kanäle Phy CH und Signalisierungsinformationen, z.B. die zugeteilten funktechnischen Ressourcen für eine Verbindung V1, über einen verbindungsbegleitenden Kontrollkanal FACH (Forward link Access CHannel) übertragen.

Ein Operations- und Wartungszentrum OMC realisiert Kontrollund Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

Im Funk-Kommunikationssystem nach Fig 1 sind sowohl in den Basisstationen BS als auch den Mobilstationen MS Übertragungsmittel und Signalisierungsmittel vorgesehen, die miteinander kommunizieren. Die Übertragungsmittel dienen der Übertragung von Daten einer Kombination mehrerer Dienste S über die aktuell verfügbaren physikalischen Kanäle Phy CH. Die physikalischen Kanäle Phy CH können als dedizierte Kanäle DCH, d.h. von einer Verbindung exklusiv genutzt, oder als gemeinsame Kanäle DSCH, d.h. abwechselnd von unterschiedlichen Verbindungen V1, V2 genutzt, ausgebildet sein. Es ist also zu unterscheiden zwischen von mehreren Diensten S1, S2, S3 einer Verbindung V1 gemeinsam genutzten physikalischen Kanälen Phy CH und gemeinsamen Kanälen DSCH, die mehreren Verbindungen V1, V2 zugeteilt sind, jedoch während einer Zeitspanne nur einer der Verbindungen V1 oder V2 zur Benutzung zugeteilt wird. Die Änderung der Zuteilung eines gemeinsamen Kanals DSCH ist ohne zusätzlichen Signalisierungsaufwand sehr schnell von Rahmen zu Rahmen möglich. Durch die zeitlich aufeinanderfolgenden Nutzung eines gemeinsamen Kanals DSCH von unterschiedlichen Verbindungen kann insbesondere der hohen Datenrate und hohen Dynamik der Datenrate mancher Verbindungen V1, V2 gut entsprochen werden.

Die Signalisierungsmittel bestimmen TFCI-Werte zu den ausgewählten Kombinationen von Transportformaten TF für die Dienste S1, S2, S3 und führen eine In-band-Signalisierung der Transportformate TF durch. In dem getrennten Kanal FACH wird die Abbildungsvorschrift von TFCI-Wert zu Kombination von Transportformaten TF und benutzten Kanälen DCH, DSCH signalisiert.

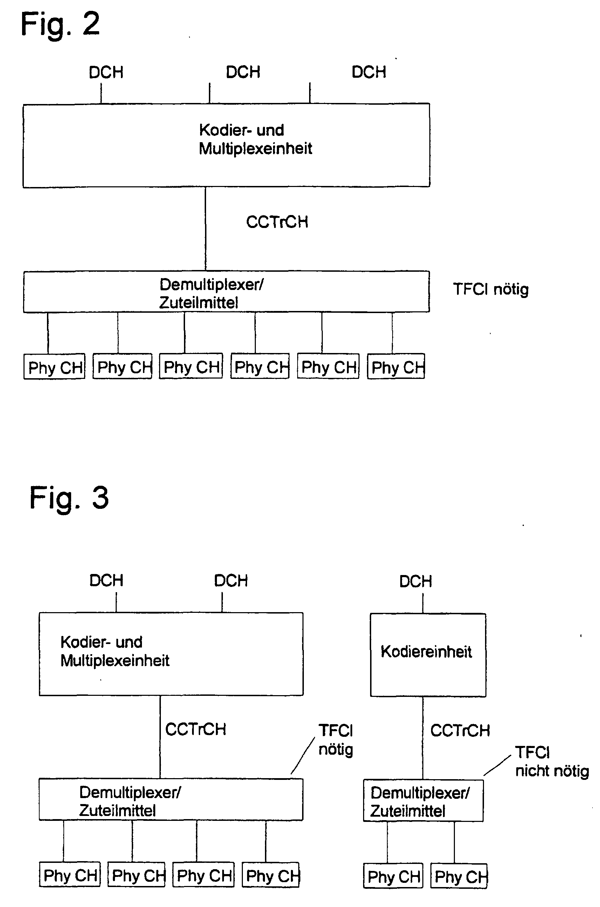

Das Schichtenmodell nach Fig 2 zeigt eine Einteilung der Protokolle des Funkkommunikationssystems in drei Schichten.
Schicht 1: physikalische Schicht zur Beschreibung aller Funktionen zur Bitübertragung über ein physikalisches Medium (z.B. Kodierung, Modulation, Sendeleistungskontrolle, Synchronisation etc.),
Schicht 2: Schicht der Datenverbindung zur Beschreibung der Abbildung von Daten auf die physikalische Schicht und deren Kontrolle,
Schicht 3: Netzwerk-Schicht zur Steuerung der Ressourcen der Funkschnittstelle.

In der Schicht 3 wird für eine Verbindung das TFCS festgelegt, währenddessen in der Schicht 2 die Auswahl einer Kombination (eines TFC) erfolgt, die wie später gezeigt mittels eines TFCI In-Band signalisiert wird.

Der Parameteraustausch zwischen den Schichten 1 und 2 unterstützt die Funktionen eines Transfers von Rahmen mit Daten der Schicht 2 über die Funkschnittstelle und der Anzeige des Status der Schicht 1 an höhere Schichten. Der Parameteraustausch zwischen den Schichten 1 und 3 unterstützt die Kontrolle der Konfiguration der Übertragung in der Schicht 1 und generiert Systeminformation über die Schicht 1.

Die Abbildung der Daten verschiedener Verbindungen S auf einen gemeinsamen physikalischen Kanal Phy CH und die Signalisierung der Zuteilung eines gemeinsamen Kanals DSCH entspricht dabei der Interaktion der Schichten 1 und 2.

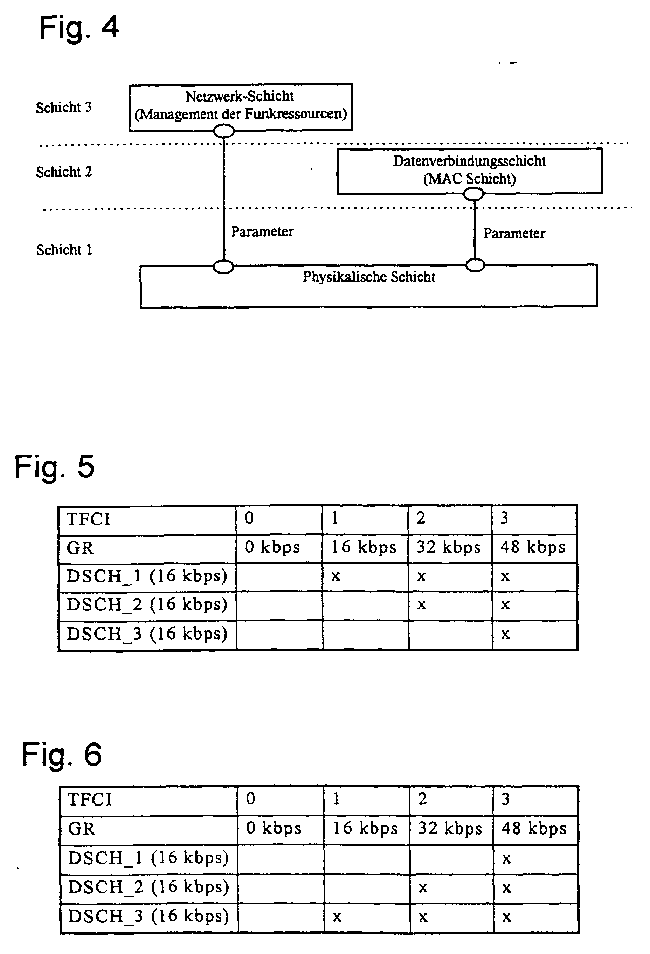

Entsprechend der Figuren 3 und 4 ergibt sich die Notwendigkeit einer Signalisierung von Transportformaten TF für aktuell übertragene Dienste.

In Fig 3 ist als funktionelle Darstellung eine Kodier- und Multiplexeinheit gezeigt, die Daten mehrerer Datenkanäle DCH, diese entsprechen jeweils den Daten eines Dienstes S1, S2, S3, auf einen kodierten gemeinsamen Transportkanal CCTrCH abbildet. Eine Abbildung ist dabei eine Vorschrift, nach welchem Bitmuster die Daten in eine serielle Datensequenz eingetragen werden. Ein Demultiplexer/Zuteilmittel verteilt die Daten des kodierten gemeinsamen Transportkanals CCTrCH auf mehrere physikalische Kanäle Phy CH. Über die physikalischen Kanäle Phy CH werden somit jeweils ständig Daten mehrerer Dienste S1, S2, S3 übertragen. Kein physikalischer Kanal Phy CH ist einem Dienst S1 oder S2 oder S3 allein sondern dem kodierten gemeinsamen Transportkanal CCTrCH mit allen seinen Diensten S1, S2, S3 zugeordnet.

Da die Empfangsseite diese Abbildung nachvollziehen und die Daten aus den physikalischen Kanälen Phy CH auslesen und wieder in getrennten Transportkanälen DCH der Dienste darstellen muß, ist eine Signalisierung vonnöten. Diese Signalisierung in Form von TFCI-Werten gibt die aktuell benutzte Kombination der Transportformate TF der Dienste wieder und wie später gezeigt wird auch die aktuelle Zuteilung eines gemeinsamen Kanals oder mehrerer gemeinsamer Kanäle DSCH. Welche Kombinationen für die Verbindung zugelassen sind (TFCS) wurde zum Verbindungsaufbau vereinbart.

Zwei Möglichkeiten in der Beziehung zwischen Datenrate und Dienstkombination sind realisierbar (siehe auch EP 98 122 719) :
1. Jede Datenrate GR entspricht genau einer Kombination von Transportformaten TF.
2. Pro Datenrate GR sind mehrere Kombination von Transportformaten TF möglich, die anhand von TFCI-Werten unterscheidbar sind.

Fig 4 zeigt die Abbildung in leicht abgewandelter Form, wobei deutlich gemacht wird, daß nur bei einer gemeinsamen Nutzung von physikalischen Kanälen Phy CH durch mehrere Dienste S1, S2, S3 die Signalisierung der Teilinformation TFCI nötig ist. Nutzt ein Dienst S1 oder S2 oder S3 einen physikalischen Kanal Phy CH ausschließlich, so kann auf die Signalisierung der Teilinformation TFCI verzichtet werden.

Die Zuteilung eines gemeinsamen Kanals DSCH an eine Verbindung V wird bezugnehmend auf Fig 5 und 6 anhand eines Beispiels mit zwei Mobilstationen MS und damit zwei Verbindungen V1, V2 dargestellt. Es werde angenommen, daß die Verbindungen 1 und 2 jeweils mit den Datenraten von 16, 32 und 48 kbps ihre Daten übertragen dürfen, wobei für beide Verbindungen V1, V2 drei gemeinsame Kanäle DSCH mit jeweils 16 kbps zur Verfügung stehen. Für beide Verbindungen V1, V2 ist in den Tabellen nach Fig 5 und 6 jeweils festgelegt, mit welchen dieser gemeinsamen Kanäle DSCH welche Datenraten zu übertragen sind. Diese Tabelle wurde zu Verbindungsbeginn festgelegt, kann jedoch auch verbindungsbegleitend geändert werden.

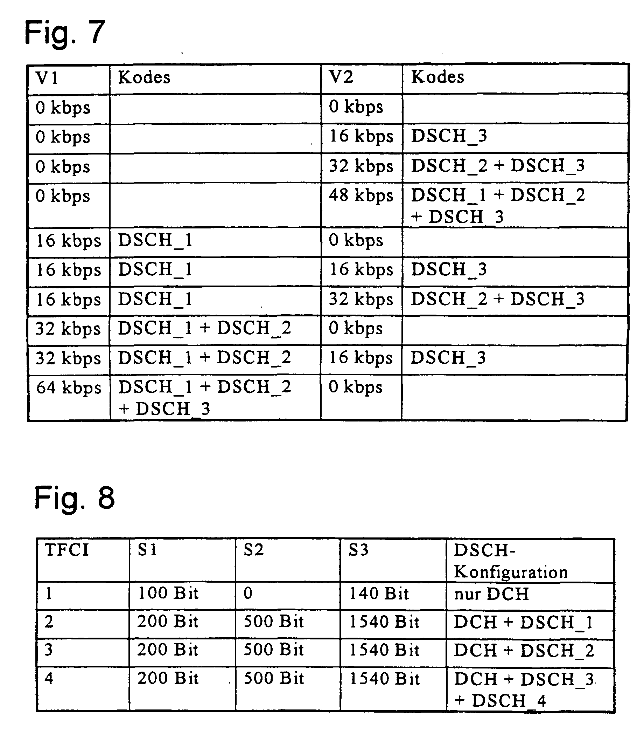

Da beide Verbindungen V1, V2 parallel bestehen, sind nur bestimmte Kombinationen der Datenraten erlaubt, um die gleichzeitige Verwendung der gemeinsamen Kanäle DSCH zu vermeiden. Diese sind in der Tabelle nach Fig 7 angegeben.

In diesem Beispiel sind von 16 möglichen Kombinationen nur 10 zugelassen. Sämtliche Kombinationen, in denen für beide Verbindungen V1, V2 gleichzeitig mehr als 16 kbps übertragen werden, müssen ausgeschlossen werden.

Allgemein ist es durch die beschriebene implizite Zuteilung von gemeinsamen Kanälen DSCH möglich, die zur Verfügung stehenden Kanäle so flexibel auf sämtliche Verbindungen V1, V2 aufzuteilen, daß jede einzelne Verbindung V1, V2 eine wesentliche höhere Übertragungskapazität nutzen kann als bei einer festen Zuteilung der Kanäle als dedizierte Kanäle DCH.

Die Einschränkung auf bestimmte Kombinationen fällt hierbei aus statistischen Gründen um so weniger ins Gewicht, je mehr Verbindungen V1, V2 und gemeinsame Kanäle DSCH zur Verfügung stehen, wenn angenommen wird, daß das Verhältnis aus der von allen Verbindungen V1, V2 maximal geforderten Datenrate und der durch Nutzung sämtlicher gemeinsamer Kanäle DSCH möglicher Datenrate konstant bleibt.

Ein zusätzlicher Freiheitsgrad ist möglich, falls nicht jede Datenrate fest, d.h. eindeutig auf vorgegebene TFCI-Werte, abgebildet wird, sondern Alternativen gewählt werden können. Zur Verdeutlichung wird in Fig 8 für eine Verbindung V1 die Einbindung der Konfiguration der gemeinsamen Kanäle DSCH in die durch die TFCI-Werte signalisierten Informationen dargestellt.

Ein TFCI-Wert steht für eine bestimmte Konfiguration der Dienste S1 bis S3. Bisher war nur ein TFCI-Wert für jede erlaubte Kombination sinnvoll. Mit der Erweiterung um die Konfigurationsdaten der gemeinsamen Kanäle DSCH kann jetzt eine bestimmte Dienstkomination unterschiedlichen Kombinationen von dedizierten und gemeinsamen Kanälen DCH, DSCH zugeordnet werden. In Fig 8 betreffen die TFCI-Werte 2, 3 und 4 dieselbe Dienstkombination, aber verschiedene zugeteilte gemeinsame Kanäle DSCH werden signalisiert.

Wenn diese Tabelle mehreren Verbindungen V1, V2 zugeordnet wird, können durch Auswahl eines geeigneten TFCI-Wertes 2,3 oder 4 verschiedene gemeinsame Kanäle DSCH alternativ gewählt werden, um bis zu drei Verbindungen V gleichzeitg eine hohe Datenrate zu ermöglichen. Dagegen kann die niedrige Gesamtdatenrate in der zweiten Zeile immer im fest zugeordneten dedizierten Kanal DCH übertragen werden, deshalb ist hierfür kein gemeinsamer Kanal DSCH erforderlich.

Die In-Band-Signalisierung der TFCI-Werte erfolgt gemäß Fig 9. Innerhalb einer rahmenweisen Übertragung von Daten (data) zusammen mit weiteren Informationen ist auch Kapazität zur Übertragung der aktuell gewählten Kombination der Transportformate TF und der Zuteilung der gemeinsamen Kanälen DSCH in Form der TFCI-Werte vorgesehen. Im FDD Modus von UMTS hat ein Rahmen eine Dauer von 10 ms, wobei Bits einer Pilotsequenz (pilot) der Kanalschätzung dienen, Bits (pc) zur Sendeleistungsregelung benötigt werden und Bits zur In-Band-Signalisierung des TFCI reserviert sind. Es folgt ein Datenanteil data mit Nutzinformationen. Eine Fehlerschutzkodierung des TFCI auf z.B. 32 Bit und eine Verwürfelung der Nutzinformationen über mehrere Rahmen sind in Fig 9 nicht gezeigt.

## Patentansprüche

1. Verfahren zur Datenübertragung über eine Funkschnittstelle zwischen einer Basisstation (BS) und Teilnehmerstationen (MS) in einem Funk-Kommunikationsystem, bei dem
- in einem breitbandigen Frequenzband Kanäle (DCH, DSCH, FACH) anhand individueller Spreizkodes unterschieden werden, wobei zumindest ein gemeinsamer Kanal (DSCH) mehreren, parallel existierenden Verbindungen (V1, V2) zur zeitlich aufeinanderfolgenden Nutzung zugeteilt wird, **dadurch gekennzeichnet, daß**
- eine im folgenden gültige Zuteilung des gemeinsamen Kanals (DSCH) für eine Verbindung (V1) in zumindest einem Kanal (DCH, DSCH) der Datenübertragung In-Band anhand einer der Verbindung (V1) zugewiesenen Datenrate (GR) signalisiert wird,
- eine Beziehung zwischen der zugewiesenen Datenrate (GR) und zu benutzenden gemeinsamen Kanälen (DSCH) in einem getrennten Signalisierungskanal (FACH) vereinbart wird, und
- die Daten (data) in den Kanälen (DCH, DSCH) zur Datenübertragung entsprechend der Zuteilung übertragen werden.

2. Verfahren nach Anspruch 1, bei dem innerhalb einer Verbindung (V1) zwischen der Basisstation (BS) und der Teilnehmerstation (MS) eine Kombination von Daten mehrerer Dienste (S) innerhalb eines oder mehrerer Kanäle (DCH, DSCH) übertragen wird, wobei die aktuelle Kombination, die Datenenrate (GR) und Zuteilung von gemeinsamen Kanälen (DSCH) anhand von TFCI-Werten signalisiert werden.

3. Verfahren nach Anspruch 1 oder 2, bei dem die Datenübertragung in Abwärtsrichtung von der Basisstation (BS) zu den Teilnehmerstationen (MS) erfolgt.

4. Verfahren nach einem der vorherigen Ansprüche, bei dem eine möglichst große Anzahl von Kanälen als gemeinsame Kanäle (DSCH) zugeteilt wird, wobei zumindest ein Kanal (DCH) pro Verbindung (V1, V2) ausschließlich zugeteilt wird.

5. Verfahren nach Anspruch 4, bei dem gemeinsame Kanäle (DSCH) bevorzugt für Verbindungen (V1) mit hoher maximaler Datenrate zugewiesen werden.

6. Verfahren nach Anspruch 4 oder 5, bei dem gemeinsame Kanäle (DSCH) bevorzugt für Verbindungen (V1) mit hoher Datenratendynamik zugewiesen werden.

7. Verfahren nach einem der vorherigen Ansprüche, bei dem bei einer Teilmenge der Datenraten (GR) für eine Verbindung (V1) mittels der In-Band-Signalisierung mehrere Kombinationen von Kanälen (DCH, DSCH) auswählbar sind.

8. Verfahren nach einem der vorherigen Ansprüche, bei dem eine Beziehung zwischen zugewiesener Datenrate (GR) und zu benutzenden gemeinsamen Kanälen (DSCH) beim Verbindungsaufbau vereinbart wird.

9. Verfahren nach einem der vorherigen Ansprüche, bei dem mit einer Teilinformation (TFCI) die einzelnen Datenraten der Dienste (S) innerhalb einer Verbindung und die Benutzung von einem oder mehreren Kanälen (DCH, DSCH) In-Band signalisiert wird.

10. Funk-Kommunikationssystem zur Datenübertragung über eine Funkschnittstelle zwischen einer Basisstation (BS) und Teilnehmerstationen (MS),
- wobei die Funkschnittstelle durch anhand von individuellen Spreizkodes unterscheidbare Kanäle (DCH, DSCH, FACH) in einem breitbandigen Frequenzband gebildet wird, und zumindest ein gemeinsamer Kanal (DSCH) mehreren, parallel existierenden Verbindungen (V1, V2) zur zeitlich aufeinanderfolgenden Nutzung zuteilbar ist,
mit Übertragungsmitteln zum Übertragen einer Kombination von Daten mehrerer Dienste (S) einer Verbindung (V1) innerhalb eines oder mehrerer Kanäle (DCH, DSCH) zur Datenübertragung zwischen der Basisstation (BS) und der Teilnehmerstation (MS), **gekennzeichnet durch**
Signalisierungsmittel zum Signalisieren
- einer im folgenden gültigen Zuteilung des gemeinsamen Kanals (DSCH) für eine Verbindung (V1) anhand einer der Verbindung (V1) zugewiesenen Datenrate (GR) mittels In-Band-Signalisierung in zumindest einem Kanal (DCH, DSCH) der Datenübertragung,
- einer Beziehung zwischen der zugewiesenen Datenrate (GR) und dem zugeteilten gemeinsamen Kanal (DSCH) in einem getrennten Signalisierungskanal (FACH).

## Claims

1. Method for transmitting data over a radio interface between a base station (BS) and subscriber stations (MS) in a radio communication system, in which
- channels (DCH, DSCH, FACH) in a broadband frequency band are distinguished using individual spread codes, with at least one common channel (DSCH) being allocated to a plurality of connections (V1, V2) existing in parallel for use at successive times, **characterized in that**
- a subsequently valid allocation of the common channel (DSCH) for a connection (V1) is signalled in-band in at least one channel (DCH, DSCH) of the data transmission using a data rate (GR) allocated to the connection (V1),
- a relationship between the allocated data rate (GR) and common channels (DSCH) which are to be used is agreed in a separate signalling channel (FACH), and
- the data (data) are transmitted in the channels (DCH, DSCH) for data transmission on the basis of the allocation.

2. Method according to Claim 1, in which,
within a connection (V1) between the base station (BS) and the subscriber station (MS), a combination of data for a plurality of services (S) is transmitted within one or more channels (DCH, DSCH), with the current combination, the data rate (GR) and the allocation of common channels (DSCH) being signalled using TFCI values.

3. Method according to Claim 1 or 2, in which the data transmission takes place in the downlink direction from the base station (BS) to the subscriber stations (MS).

4. Method according to one of the preceding claims, in which
the largest possible number of channels are allocated as common channels (DSCH), with at least one channel (DCH) per connection (V1, V2) being allocated exclusively.

5. Method according to Claim 4, in which
common channels (DSCH) are preferably allocated for connections (V1) having a high maximum data rate.

6. Method according to Claim 4 or 5, in which
common channels (DSCH) are preferably allocated for connections (V1) having high data rate dynamics.

7. Method according to one of the preceding claims, in which,
for a subset of the data rates (GR), the in-band signalling can be used to select a plurality of combinations of channels (DCH, DSCH) for a connection (V1).

8. Method according to one of the preceding claims, in which
a relationship between allocated data rate (GR) and common channels (DSCH) to be used is agreed upon connection setup.

9. Method according to one of the preceding claims, in which
a partial information item (TFCI) is used to signal in-band the individual data rates for the services (S) within a connection and the use of one or more channels (DCH, DSCH).

10. Radio communication system for transmitting data over a radio interface between a base station (BS) and subscriber stations (MS),
- where the radio interface is formed in a broadband frequency band by channels (DCH, DSCH, FACH) which can be distinguished using individual spread codes, and at least one common channel (DSCH) can be allocated to a plurality of connections (V1, V2) existing in parallel for use at successive times,
having transmission means for transmitting a combination of data for a plurality of services (S) on a connection (V1) within one or more channels (DCH, DSCH) for data transmission between the base station (BS) and the subscriber station (MS), **characterized by** signalling means for signalling
- a subsequently valid allocation of the common channel (DSCH) for a connection (V1) using a data rate (GR), allocated to the connection (V1), by means of in-band signalling in at least one channel (DCH, DSCH) of the data transmission,
- a relationship between the allocated data rate (VR) and the allocated common channel (DSCH) in a separate signalling channel (FACH).

## Revendications

1. Procédé de transmission de données par l'intermédiaire d'une interface radio entre une station de base (BS) et des stations d'abonnés (MS) dans un système de radiocommunication dans lequel
- dans une bande de fréquences à large bande, des canaux (DCH, DSCH, FACH) sont différenciés à l'aide de codes d'étalement individuels, au moins un canal commun (DSCH) étant alloué à plusieurs liaisons (V1, V2) qui existent parallèlement, aux fins d'une utilisation successive dans le temps,
**caractérisé en ce que**
- une allocation, valable dans la suite, du canal commun (DSCH) pour une liaison (V1) est signalée, dans au moins un canal (DCH, DSCH) de la transmission de données, dans la bande (« in band ») à l'aide d'un débit de données (GR) alloué à la liaison (V1);
- une relation entre le débit de données (GR) alloué et les canaux communs (DSCH) à utiliser fait l'objet d'une convention effectuée dans un canal de signalisation séparé (FACH) et
- il est procédé à la transmission des données (data) dans les canaux (DCH, DSCH) pour la transmission des données conformément à l'allocation.

2. Procédé selon la revendication 1, dans lequel, à l'intérieur d'une liaison (V1) entre la station de base (BS) et la station d'abonné (MS), une combinaison de données de plusieurs services (S) est transmise à l'intérieur d'un ou de plusieurs canaux (DCH, DSCH), la combinaison actuelle, le débit de données (GR) et l'allocation de canaux communs (DSCH) étant signalés à l'aide de valeurs TFCI.

3. Procédé selon la revendication 1 ou 2, dans lequel la transmission de données se fait dans le sens descendant de la station de base (BS) vers les stations d'abonnés (MS).

4. Procédé selon l'une des revendications précédentes, dans lequel un nombre de canaux aussi élevé que possible est alloué en tant que canaux communs (DSCH), au moins un canal (DCH) étant exclusivement alloué par liaison (V1, V2).

5. Procédé selon la revendication 4, dans lequel des canaux communs (DSCH) sont de préférence alloués pour des liaisons (V1) avec un haut débit de données maximal.

6. Procédé selon la revendication 4 ou 5, dans lequel des canaux communs (DSCH) sont de préférences alloués pour des liaisons (V1) avec une dynamique élevée du débit de données.

7. Procédé selon l'une des revendications précédentes, dans lequel plusieurs combinaisons de canaux (DCH, DSCH) peuvent être sélectionnées, dans le cas d'un ensemble partiel des débits de données (GR), pour une liaison (V1) au moyen de la signalisation dans la bande (« in band »).

8. Procédé selon l'une des revendications précédentes, dans lequel une relation entre débit de données alloué (GR) et canaux communs à utiliser (DSCH) fait l'objet d'une convention effectuée lors de l'établissement d'une liaison.

9. Procédé selon l'une des revendications précédentes, dans lequel il est procédé à la signalisation des débits de données distincts des services (S) à l'intérieur d'une liaison et de l'utilisation d'un ou de plusieurs canaux (DCH, DSCH) dans la bande (« in band ») avec une information partielle (TFCI).

10. Système de radiocommunication pour la transmission de données par l'intermédiaire d'une interface radio entre une station de base (BS) et des stations d'abonnés (MS),
- l'interface radio est constituée par des canaux (DCH, DSCH, FACH) pouvant être différenciés par des codes d'étalement individuels dans une bande de fréquences à large bande et au moins un canal commun (DSCH) pouvant être alloué à plusieurs liaisons (V1, V2) qui existent en parallèle pour une utilisation successive dans le temps,
avec des moyens de transmission pour transmettre une combinaison de données de plusieurs services (S) d'une liaison (V1) à l'intérieur d'un ou de plusieurs canaux (DCH, DSCH) pour la transmission de données entre la station de base (BS) et la station d'abonné (MS), **caractérisé par**
des moyens de signalisation pour signaliser
- une allocation, valable dans la suite, du canal commun (DSCH) pour une liaison (V1), à l'aide d'un débit de données (GR) alloué à la liaison (V1), au moyen d'une signalisation dans la bande (« in band ») dans au moins un canal (DCH, DSCH) de la transmission de données;
- une relation entre le débit de données alloué (GR) et le canal commun alloué (DSCH) dans un canal de signalisation séparé (FACH).
